# EUROPEAN PATENT SPECIFICATION

(11) **EP 4 523 970 B1**
(45) Date of publication and mention of the grant of the patent: **21.10.2026**
(21) Application number: 24189648.9
(22) Date of filing: 19.07.2024
(51) Int. Cl.: B60R 13/07, B60R 19/48, B62D 25/08

(54) **VEHICLE STRUCTURE**
FAHRZEUGAUFBAU
STRUCTURE DE VÉHICULE

(30) Priority: 15.09.2023 JP 2023150382
(43) Date of publication of application: 19.03.2025
(73) Proprietor: Suzuki Motor Corporation, Shizuoka 432-8611 (JP)
(72) Inventor: SAITO, Kazumasa, HAMAMATSU-SHI, 431-0201 (JP); SUZUKI, Kazuma, HAMAMATSU-SHI, 431-0201 (JP)
(74) Representative: Plasseraud IP

(56) References cited:
- JP-A- 2021 059 268
- US-A1- 2017 129 430

## Description

### [Technical Field]

The present invention relates to a vehicle structure including a sensor device on the back surface side of an outer panel forming a design surface on the outside of a vehicle.

### [Background Art]

In general, outer panels such as a bumper and a grille that form design surfaces on the outside of a vehicle are provided at the front and rear of a vehicle such as an automobile. A sensor device that that senses the environment outside the vehicle using a camera, radar, ultrasonic waves, or the like is arranged at the back surface side of the outer panel in some cases.

A structure disclosed in Patent Literature 1 has been known as an example of a vehicle structure having a structure for arranging a sensor device on the back surface side of an outer panel. Patent Literature 1 discloses a vehicle structure including a sensor device on a back surface side of an outer panel forming a design surface on an outside of a vehicle, whereby the vehicle structure comprises: a reinforcement member that is coupled to a vehicle body structural member of the vehicle and reinforces the outer panel from the back surface side of the outer panel, the reinforcement member having an attachment portion to which the sensor device is attached and an upper reinforcement wall that is located above the attachment portion.

The patent document US 2017/129430 discloses a front part structure of a vehicle including a bumper fascia disposed at a front part of the vehicle and having an upper end portion opposing a leading edge of a hood, a shroud disposed rearward from the bumper fascia and configured to lead cooling air to a given device.

### [Citation List]

### [Patent Literature]

[Patent Literature 1] JP 2021-059268 A

### [Summary of Invention]

### [Problem to be Solved by the Invention]

It is to be noted that an upper portion of the outer panel provided at the front of the vehicle is supported by a vehicle body structural member such as a hood lock member, and a gap is formed between the upper portion of the outer panel and the vehicle body structural member. Accordingly, when a liquid such as rainwater enters a region on the back surface side of the outer panel from the gap and reaches the sensor device such as a radar antenna, a problem such as deterioration of the sensing accuracy of the sensor device may occur. Moreover, the sensor device is not limited to being attached to the front of the vehicle, but is attached to the rear or the side of the vehicle in other cases, and a similar problem may occur in such cases.

In view of the foregoing, an object of the present invention is to provide a vehicle structure that has a structure that can keep liquid such as rainwater from reaching a sensor device.

### [Means for Solving the Problem]

In order to achieve the above object, one aspect of the present invention provides a vehicle structure according to appended claims.

### [Advantageous Effect of Invention]

According to an aspect of the present invention, it is possible to provide a vehicle structure that has a structure that can keep liquid such as rainwater from reaching a sensor device.

### [Brief Description of Drawings]

[Figure 1] Figure 1 is a perspective view of a vehicle structure according to an embodiment of the present invention.
[Figure 2] Figure 2 is an exploded perspective view of the vehicle structure.
[Figure 3] Figure 3 is an enlarged partial perspective view of the vehicle structure as viewed from the vehicle front.
[Figure 4] Figure 4 is an enlarged partial view for describing a gap between an upper portion of an outer panel and an upper portion of a reinforcement member as viewed from the vehicle rear.
[Figure 5] Figure 5 is an enlarged partial perspective view for describing the gap between the upper portion of the outer panel and the upper portion of the reinforcement member as viewed from the vehicle rear.
[Figure 6] Figure 6 is a perspective view of a middle reinforcement portion of the reinforcement member.
[Figure 7] Figure 7 is a front view of the middle reinforcement portion.
[Figure 8] Figure 8 is a cross-sectional view of the middle reinforcement portion taken along line A-A shown in Figure 7.
[Figure 9] Figure 9 is a diagram for describing the flow of liquid along the middle reinforcement portion.
[Figure 10A] Figure 10A is a schematic front view of a reinforcement member (middle reinforcement portion) according to a first modification.
[Figure 10B] Figure 10B is a schematic front view of a reinforcement member (middle reinforcement portion) according to a second modification.
[Figure 10C] Figure 10C is a schematic front view of a reinforcement member (middle reinforcement portion) according to a third modification.
[Figure 11] Figure 11 is a schematic front view of a reinforcement member (middle reinforcement portion) according to a fourth modification.
[Figure 12] Figure 12 is a schematic front view of a reinforcement member (middle reinforcement portion) according to a fifth modification.

### [Modes for Carrying Out the Invention]

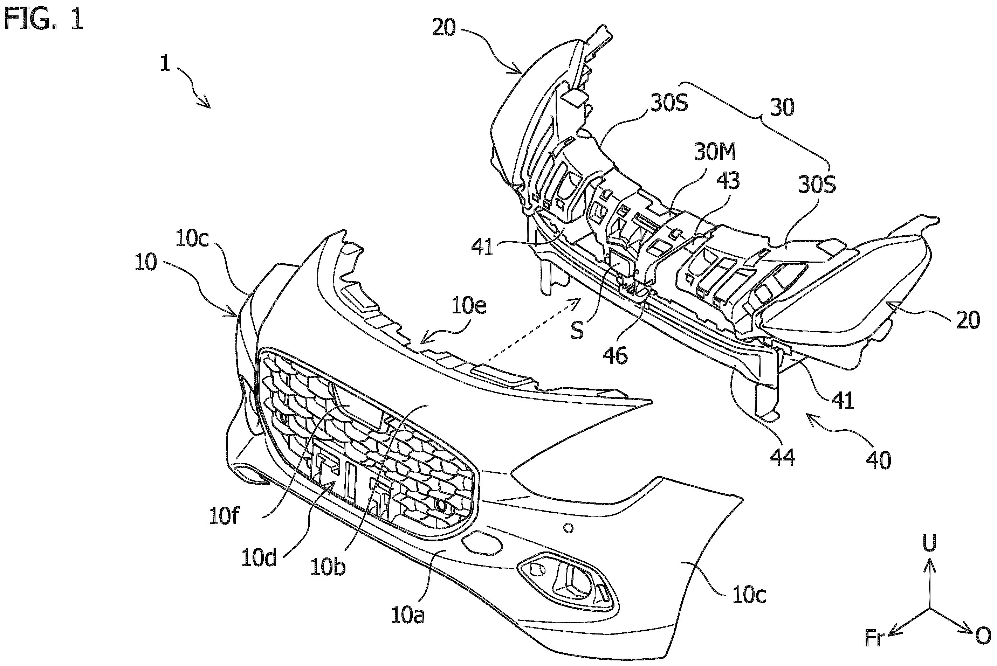

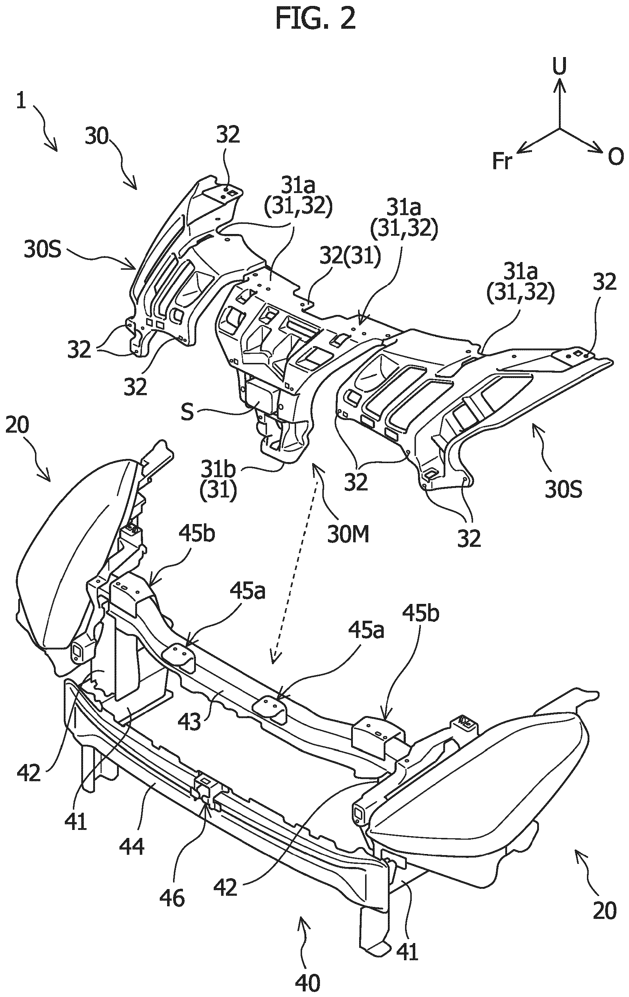

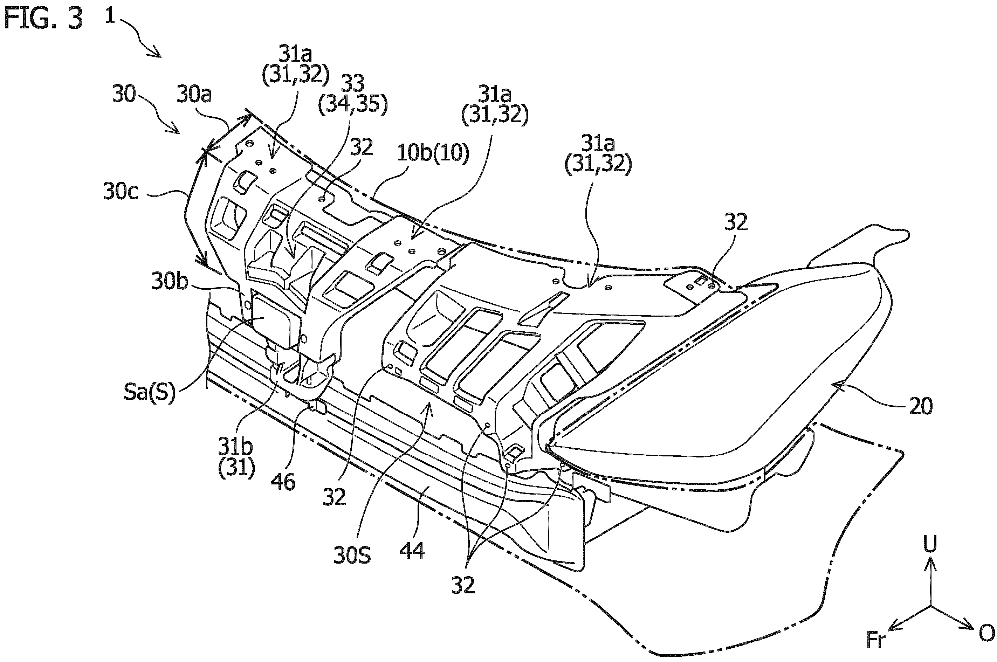

Hereinafter, an embodiment of the present invention will be described with reference to the accompanying drawings. Figures 1 to 3 are diagrams for describing a vehicle structure 1 according to an embodiment of the present invention. Figure 1 is a perspective view as viewed from the vehicle front of the vehicle structure 1, Figure 2 is an exploded perspective view of the vehicle structure 1, and Figure 3 is an enlarged partial perspective view. Note that an outer panel 10, described later, is removed in Figure 2, and an outline of the outer panel 10 is shown in a double-dashed line in Figure 3. In the drawings, an arrow Fr direction indicates the vehicle front in the longitudinal direction of the vehicle (i.e., in a vehicle front-rear direction), an arrow O direction indicates the outside (outside in vehicle width direction) of the vehicle in the vehicle width direction, and an arrow U direction indicates the upper side of the vehicle in the vertical direction of the vehicle. In the following description, "front" and "rear" correspond to the front and rear in the longitudinal direction of the vehicle, and "up" and "down" correspond to up and down in the vertical direction of the vehicle. In addition, "left" and "right" correspond to left and right in the vehicle width direction when viewed from the front side of the vehicle toward the rear side of the vehicle.

### (Summary of vehicle structure)

As illustrated in Figures 1 to 3, the vehicle structure 1 includes a structure for arranging a sensor device S that senses (detects) the environment outside the vehicle on the back surface side of the outer panel 10 of the vehicle. In the present embodiment, the vehicle structure 1 also includes a structure for reinforcing the outer panel 10 and attaching (fixing) the outer panel 10 to the vehicle body side. In the present embodiment, the vehicle structure 1 is applied as a vehicle front structure. In the vehicle structure 1, at the front of the vehicle, each of a pair of lamp devices 20, 20, which are separated from each other in the vehicle width direction, are arranged adjacent to the outer panel 10.

In the present embodiment, the vehicle structure 1 includes the outer panel 10, the lamp device 20, a reinforcement member 30, and a vehicle body structural member 40. The vehicle structure 1 is generally symmetrical in the vehicle width direction.

The outer panel 10 is a member that forms a design surface on the outside of the vehicle and extends in the vehicle width direction. In the present embodiment, the outer panel 10 is a front bumper that forms an outer design surface at the front of the vehicle. In the illustrated example, the outer panel 10 as the front bumper has a bumper front surface portion 10a extending over the entire vehicle width direction, a bumper inclined surface portion 10b extending upward toward the rear in an inclined manner (in other words, extending obliquely upward toward the inside of the vehicle) to a front portion of a front hood (not illustrated) from an upper portion of the bumper front surface portion 10a, and bumper side surface portions 10c extending rearward from both end portions in the vehicle width direction of the bumper front surface portion 10a. A large bumper opening is opened at the center of the bumper front surface portion 10a. The outer panel 10 has a resin front grille 10d that closes the bumper opening. A plurality of vent holes are opened in the front grille 10d, and the front grille 10d is an intake member in the illustrated example.

In the present embodiment, the lamp device 20 is a front lamp (also referred to as headlight) that mainly illuminates a region at the front of the vehicle. The lamp device 20 is provided on each of the left and right at the vehicle front.

The reinforcement member 30 is a member for reinforcing the outer panel 10 from its back surface 10e side and fixing the outer panel 10 to the vehicle body (vehicle body structural member 40). The reinforcement member 30 generally extends along the back surface 10e of the outer panel 10 and over the entire vehicle width direction of the outer panel 10. The outer panel 10 is a large panel that is thin and spreads in a wide range in the vehicle width direction, and therefore, its rigidity is relatively low. In order to reinforce the low-rigidity outer panel 10, the reinforcement member 30 supports the outer panel 10 at a plurality of locations from the back surface 10e of the outer panel 10. As described later, the reinforcement member 30 is coupled (fixed) to the vehicle body (vehicle body structural member 40) at a plurality of locations. The reinforcement member 30 supports the outer panel 10 from the back surface 10e side by being coupled (fixed) to the back surface 10e of the outer panel 10 at a plurality of locations. Note that the structure of the reinforcement member 30 will be described later.

In the present embodiment, the sensor device S is attached to the reinforcement member 30. The sensor device S is a device that is attached to the reinforcement member 30 to sense the environment outside the vehicle. In the present embodiment, the sensor device S is a device that senses an obstacle (obstacle outside vehicle) such as another vehicle located in front the vehicle using electromagnetic waves. In the present embodiment, the sensor device S uses millimeter waves as electromagnetic waves. That is, the sensor device S is a millimeter wave radar. Note, however, that the electromagnetic waves (sensing waves) used by the sensor device S are not limited to millimeter waves, and they may be microwaves, for example. Note that when a liquid such as rainwater reaches a reception unit such as a wave sensing sensor front surface Sa of the sensor device S and the liquid adheres to or enters the reception unit (sensor front surface Sa), this can affect the sensing (detection) accuracy of the sensor device S. While the following description will be given by using a case in which the sensor device S is a radar using millimeter waves or microwaves as an example, the sensor device S is not limited to such a case. Other sensors for which sensing accuracy can be affected by adhering of liquid to the reception unit can be adopted as the sensor device S. Examples of other sensors that can be adopted include an infrared camera that receives infrared light to capture an image, or an optical camera that receives visible light to capture an image.

The sensor device S has the sensor front surface Sa that outputs or receives input of electromagnetic waves. In the illustrated example, the sensor device S is substantially attached to the center in the vehicle width direction and center in the vertical direction of the vehicle in the reinforcement member 30 with the sensor front surface Sa facing the vehicle front via coupling tools such as a sensor support plate and bolts (not illustrated) behind the front grille 10d, and is fixed to the reinforcement member 30. In this state, the sensor device S is spaced apart from the back surface 10e of the outer panel 10 (front grille 10d in illustrated example) and is opposed to the back surface 10e. A region 10f (part) of the outer panel 10 (front grille 10d) opposite the sensor device S is made of a material (e.g., synthetic resin or the like) having characteristics that allow electromagnetic waves to pass through, and is formed as a flat plate as a sensing wave passage region (electromagnetic wave passage portion). Hereinafter, the region 10f is referred to as a sensing wave passage region 10f as appropriate.

The sensor device S outputs electromagnetic waves, and the output electromagnetic waves pass the sensing wave passage region 10f of the front grille 10d and are output to the vehicle front. Then, in a case in which there is an obstacle at the vehicle front, the electromagnetic waves output to the vehicle front are reflected by the obstacle. The sensor device S receives the electromagnetic waves reflected by the obstacle and that passes the sensing wave passage region 10f to sense the obstacle at the vehicle front.

The vehicle body structural member 40 is a highly rigid member forming a structural member of the vehicle body. At the vehicle front, a pair of front side members 41, 41, a pair of vertical braces 42, 42, a first cross member 43, a second cross member 44, and the like are provided as the vehicle body structural member 40. That is, each element (41, 42, 43, 44) forms a part of the vehicle body structural member 40 of the vehicle.

The pair of front side members 41, 41 are separated from each other in the vehicle width direction below the vehicle, and each front side member 41 extends in the longitudinal direction. Each vertical brace 42 is joined to an upper surface of the front side member 41 and extends upward. The first cross member 43 and the second cross member 44 are separated from each other in the vertical direction of the vehicle, and each cross member 43, 44 extends in the vehicle width direction.

The first cross member 43 is located above the second cross member 44 in the vertical direction of the vehicle, and can be referred to as an upper cross member or an upper bumper beam. The first cross member 43 is also a hood lock member as a structural member that receives a front portion of the front hood (not illustrated). One end of the first cross member 43 is joined to the upper end of one vertical brace 42, and the other end of the first cross member 43 is joined to the upper end of the other vertical brace 42. One end of the second cross member 44 (also referred to as lower cross member or lower bumper beam) is joined to the front end of one front side member 41, and the other end of the second cross member 44 is joined to the front end of the other front side member 41.

### (Details of vehicle structure)

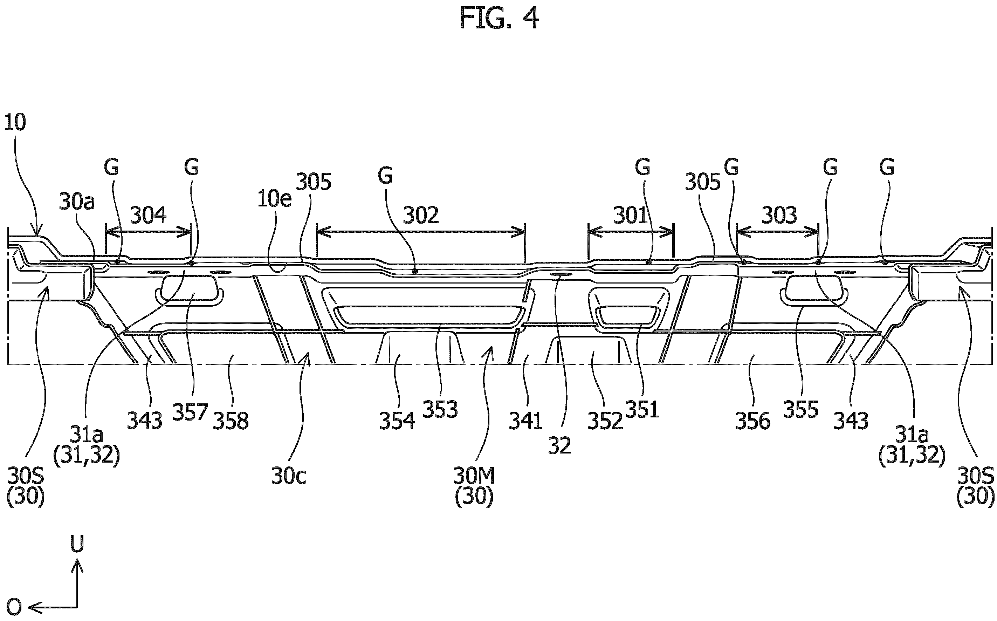

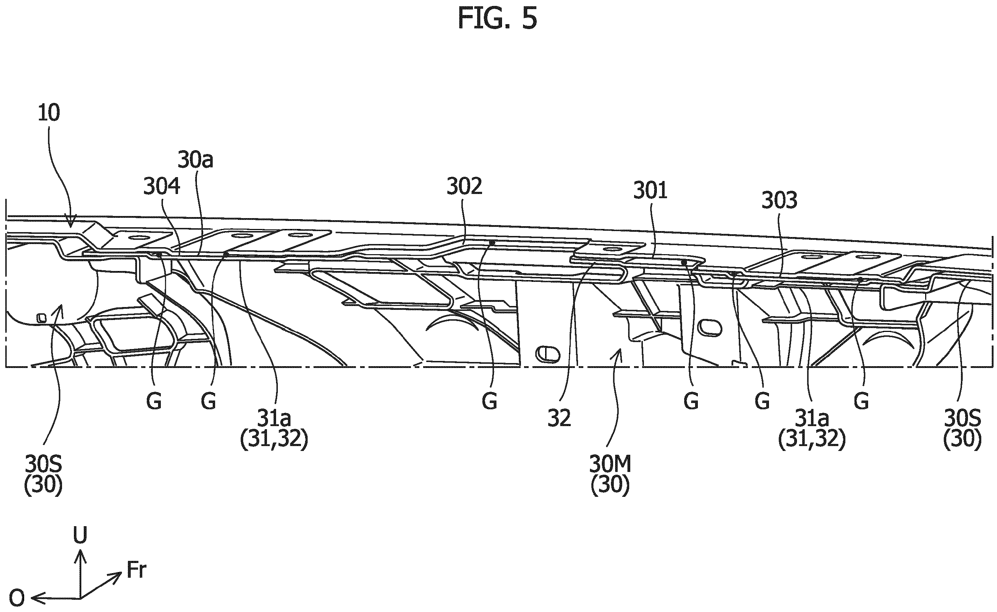

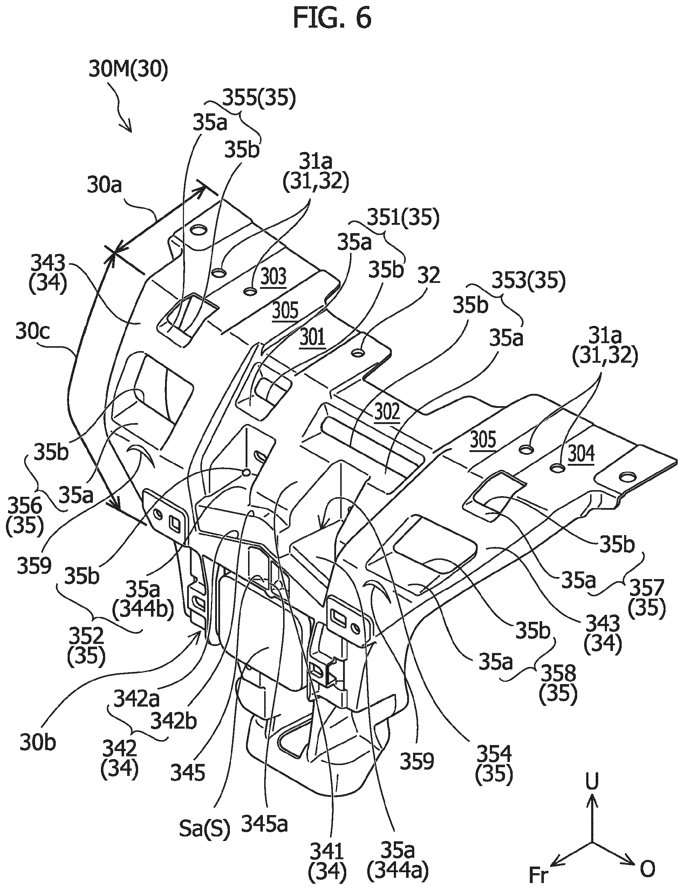

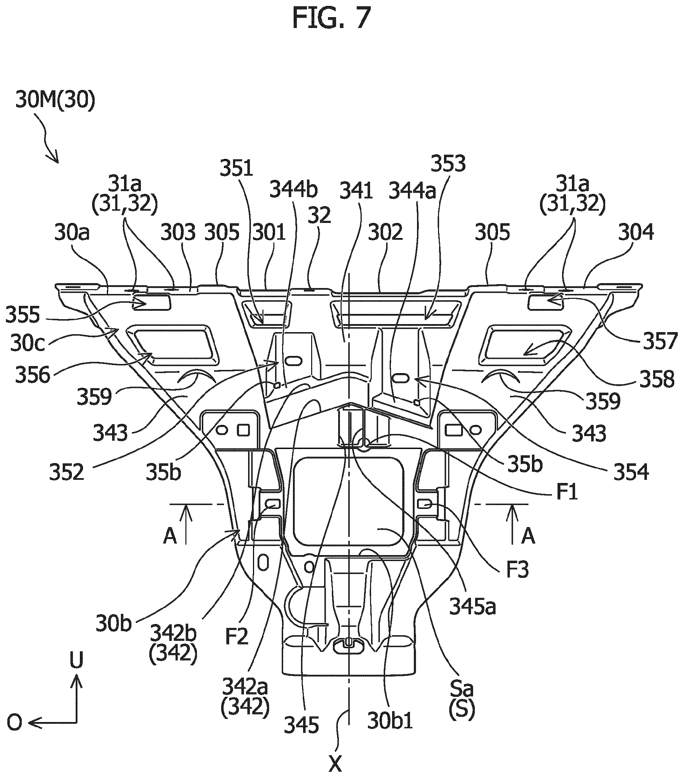

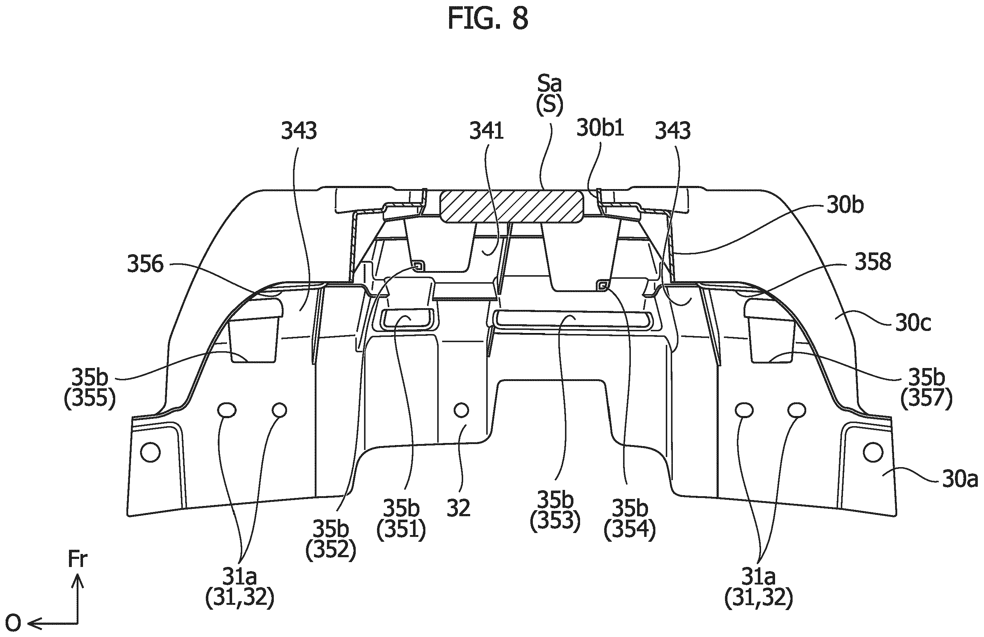

Hereinafter, the vehicle structure 1 will be described in detail with reference to Figures 1 to 8. Figures 4 and 5 are diagrams for describing a gap G between an upper portion of the outer panel 10 and an upper portion 30a of the reinforcement member 30 as viewed from the vehicle rear. Figure 4 is an enlarged partial view and Figure 5 is an enlarged partial perspective view. Figure 6 is a perspective view of a middle reinforcement portion 30M, described later, of the reinforcement member 30, Figure 7 is a front view of the middle reinforcement portion 30M, and Figure 8 is a cross-sectional view of the middle reinforcement portion 30M taken along line A-A shown in Figure 7. Note, however, that the vehicle body structural member 40 and a first upper bracket 45a described later are removed in Figures 4 and 5.

With reference to Figures 1 to 3, the reinforcement member 30 extends in the vehicle width direction between the pair of lamp devices 20, 20. The reinforcement member 30 is a resin injection-molded product, for example. The reinforcement member 30 is formed so as to extend in the vehicle width direction generally along the bumper front surface portion 10a and the bumper inclined surface portion 10b on the back surface 10e of the outer panel 10.

The reinforcement member 30 has a vehicle body coupling portion 31 coupled to the cross members (43, 44), and a panel coupling portion 32 coupled to the outer panel 10. The vehicle body coupling portion 31 and the panel coupling portion 32 are both provided at a plurality of locations.

In the illustrated example, the vehicle body coupling portion 31 has a first vehicle body coupling portion 31a coupled to the first cross member 43 and a second vehicle body coupling portion 31b coupled to the second cross member 44. The reinforcement member 30 is supported by being coupled to both the upper first cross member 43 and the lower second cross member 44. The reinforcement member 30 has about the same length as the cross members (43, 44) in the vehicle width direction. In the illustrated example, the first vehicle body coupling portion 31a is provided in the upper portion 30a of the reinforcement member 30 at two locations in a central part in the vehicle width direction, one location on the right side in the vehicle width direction, and one location on the left side in the vehicle width direction. The second vehicle body coupling portion 31b is provided below a central part in the vehicle width direction of the reinforcement member 30.

Specifically, the reinforcement member 30 is supported by the first cross member 43 via the first upper bracket 45a and a second upper bracket 45b which are joined to the upper first cross member 43, and supported by the second cross member 44 via a lower bracket 46 joined to the lower second cross member 44. The first upper bracket 45a is provided at two locations near the center in the vehicle width direction of the first cross member 43, and the second upper bracket 45b is provided in both end portions in the vehicle width direction of the first cross member 43.

The first vehicle body coupling portion 31a of the upper portion 30a of the reinforcement member 30 is coupled to the first cross member 43 by being coupled (fastened) to each of the first upper bracket 45a and the second upper bracket 45b by a coupling tool such as a bolt, and the second vehicle body coupling portion 31b below the central part in the vehicle width direction of the reinforcement member 30 is coupled to the second cross member 44 by being locked to the lower bracket 46.

The panel coupling portion 32 is provided at a plurality of locations such as upper and lower portions on the outer side in the vehicle width direction, the upper portion 30a in the vertical direction of the vehicle, and the central part in the vehicle width direction of the reinforcement member 30. Although not particularly limited, of the vehicle body coupling portion 31, the first vehicle body coupling portion 31a coupled to the first cross member 43 is also coupled to the outer panel 10 and functions as the panel coupling portion 32.

In the illustrated example, the reinforcement member 30 is divided into the middle reinforcement portion 30M to which the sensor device S is attached, and a side reinforcement portion 30S coupled to the outer end in the vehicle width direction of the middle reinforcement portion 30M. The middle reinforcement portion 30M and the side reinforcement portion 30S are coupled (fastened) to each other by a coupling tool such as a bolt. That is, the reinforcement member 30 has the left side reinforcement portion 30S, the right side reinforcement portion 30S, and the middle reinforcement portion 30M between the left side reinforcement portion 30S and the right side reinforcement portion 30S. The reinforcement member 30 is formed by coupling the left and right side reinforcement portions 30S to the middle reinforcement portion 30M. In other words, the reinforcement member 30 is a reinforcement assembly or a reinforcement body formed by combining a plurality of members.

In relation to the vehicle body structural member 40, the upper portion 30a of each side reinforcement portion 30S is coupled to the second upper bracket 45b, the upper portion 30a of the middle reinforcement portion 30M is coupled to the first upper bracket 45a, and a lower portion of the middle reinforcement portion 30M is coupled to the lower bracket 46.

Next, the shape, the structure, and the like of key parts of the reinforcement member 30 will mainly be described in detail.

With reference to Figures 3 to 5, the upper portion 30a of the reinforcement member 30 is overlapped on the back surface 10e of an upper portion of the outer panel 10 (upper back surface). With reference to Figures 4 and 5, the first vehicle body coupling portion 31a and the panel coupling portion 32 are provided in the upper portion 30a of the middle reinforcement portion 30M to which the sensor device S is attached. Then, the upper portion 30a of the middle reinforcement portion 30M abuts on the back surface 10e of the upper portion of the outer panel 10 mainly at the first vehicle body coupling portion 31a and the panel coupling portion 32. The upper portion 30a of the middle reinforcement portion 30M is slightly separated from the back surface 10e of the upper portion of the outer panel 10 mainly at locations other than first vehicle body coupling portion 31a and the panel coupling portion 32. There is a slight gap G between the upper portion 30a of the middle reinforcement portion 30M and the back surface 10e of the upper portion of the outer panel 10.

Specifically, in the upper portion 30a of the middle reinforcement portion 30M, the vehicle body coupling portion 31 (first vehicle body coupling portion 31a) is provided on both sides in the vehicle width direction and the panel coupling portion 32 is provided at the center in the vehicle width direction. As described above, the first vehicle body coupling portion 31a of the upper portion 30a of the middle reinforcement portion 30M also functions as the panel coupling portion 32. Accordingly, in the upper portion 30a of the middle reinforcement portion 30M, the panel coupling portion 32 is provided at the center in the vehicle width direction and on both sides in the vehicle width direction. Then, in the upper portion 30a of the middle reinforcement portion 30M, a first groove 301 and a second groove 302 extending in the longitudinal direction are formed in parts adjacent to the central panel coupling portion 32 in the vehicle width direction. Furthermore, in the upper portion 30a of the middle reinforcement portion 30M, a third groove 303 extending in the longitudinal direction is formed in a part including one vehicle body coupling portion 31 (panel coupling portion 32) in the vehicle width direction, and a fourth groove 304 extending in the longitudinal direction is formed in a part including the other vehicle body coupling portion 31 (panel coupling portion 32) in the vehicle width direction. Each groove (301, 302, 303, 304) is depressed toward the lower side of the vehicle from other parts. In the illustrated example, in the upper portion 30a of the middle reinforcement portion 30M, a portion between the first groove 301 and the third groove 303 and a portion between the second groove 302 and the fourth groove 304 each form a raised portion 305 raised upward.

The back surface 10e of the upper portion of the outer panel 10 has an uneven shape that abuts mainly on the third groove 303, the fourth groove 304, the central panel coupling portion 32, the left and right raised portions 305, and left and right end portions in the upper portion 30a of the middle reinforcement portion 30M. Then, the gap G between the upper portion 30a of the middle reinforcement portion 30M and the back surface 10e of the upper portion of the outer panel 10 is mainly formed in parts corresponding to the first groove 301 and the second groove 302 on the center side in the vehicle width direction. Note that a slight gap G is also formed in parts corresponding to the third groove 303, the fourth groove 304, and the like.

Here, a liquid such as rainwater can enter the region on the back surface 10e side of the outer panel 10 through the gap G, for example. As a countermeasure to liquid entry through the gap G, the middle reinforcement portion 30M of the reinforcement member 30 has the following structure from the viewpoint of protecting the sensor device S and maintaining sensing accuracy.

The reinforcement member 30 is located above the sensor device S on the back surface 10e side of the outer panel 10, and includes a water conduit portion 33 for guiding liquid to a position away from the sensor device S. In the illustrated example, the water conduit portion 33 is provided in the middle reinforcement portion 30M to which the sensor device S which is a protection target (submergence control target) is attached.

In the present embodiment, the middle reinforcement portion 30M of the reinforcement member 30 has an attachment portion 30b to which the sensor device S is attached, and an upper reinforcement wall 30c located above the attachment portion 30b and having a portion extending obliquely upward toward the inside of the vehicle.

In the illustrated example, the attachment portion 30b is substantially provided at the center in the vehicle width direction and the center in the vertical direction of the vehicle in the middle reinforcement portion 30M. With reference to Figure 7, a housing hole 30b1 that penetrates the middle reinforcement portion 30M in the longitudinal direction and having a substantially rectangular aperture is formed in the attachment portion 30b. The sensor device S is attached by being fixed to a surrounding wall of the housing hole 30b1 via coupling tools such as a sensor support plate and bolts (not illustrated) with the sensor front surface Sa facing the vehicle front in the housing hole 30b1. Fixing points (F1, F2, F3) of the sensor device S to the surrounding wall of the housing hole 30b1 of the attachment portion 30b are provided on an upper wall, a left wall, and a right wall of the surrounding wall, respectively. The fixing point F1 of the upper wall is set at a position shifted to one side of the vehicle width direction (right side in illustrated example) from a center line X of the sensor device S and the middle reinforcement portion 30M in the vehicle width direction. The fixing point F2 of the left wall and the fixing point F3 of the right wall are both set at the substantial central position of the height of the housing hole 30b1 in the vertical direction of the vehicle.

The upper reinforcement wall 30c is a portion of the middle reinforcement portion 30M of the reinforcement member 30 that occupies a region between the upper portion 30a and the attachment portion 30b. The portion of the upper reinforcement wall 30c extending obliquely upward toward the inside of the vehicle extends obliquely downward toward the attachment portion 30b from the upper portion 30a of the reinforcement member 30 (middle reinforcement portion 30M). In the present embodiment, the vehicle structure 1 is applied as a vehicle front structure, and "obliquely upward toward the inside of the vehicle" of the upper reinforcement wall 30c is a direction headed toward the vehicle rear and obliquely upper direction at the vehicle front. Accordingly, in the illustrated example, the upper reinforcement wall 30c has a surface inclined downward toward the front (i.e., upward toward the rear) in the longitudinal direction of the vehicle, and this surface is opposed to the back surface 10e of the bumper inclined surface portion 10b of the outer panel 10.

A lower portion of the upper reinforcement wall 30c extends in the vertical direction of the vehicle and is continuous with the upper portion of the attachment portion 30b. Specifically, the upper reinforcement wall 30c is bent at a bending portion at the center in the vertical direction such that the substantial upper half thereof bends toward the vehicle rear (inside of vehicle). Then, the upper half (upper portion) of the upper reinforcement wall 30c forms the portion that extends obliquely upward toward the inside of the vehicle, and a lower half (lower portion) of the upper reinforcement wall 30c forms the portion that extends in the vertical direction of the vehicle and is continuous with the upper portion of the attachment portion 30b.

Then, the water conduit portion 33 is provided on a surface of the upper reinforcement wall 30c facing the back surface 10e of the outer panel 10. In other words, the water conduit portion 33 is formed on a surface of the upper reinforcement wall 30c opposite the back surface 10e of the outer panel 10.

In the present embodiment, the upper portion 30a of the reinforcement member 30 extends toward the inside of the vehicle from the upper end of the upper reinforcement wall 30c and is overlapped on the back surface 10e (upper back surface) of the upper portion of the outer panel 10 as described above. Specifically, the upper portion 30a of the reinforcement member 30 is overlapped on the upper portion of the bumper inclined surface portion 10b of the outer panel 10. Then, the water conduit portion 33 is arranged between the upper portion 30a and attachment portion 30b of the reinforcement member 30 (middle reinforcement portion 30M).

In the present embodiment, the water conduit portion 33 has an inclined portion 34 extending in a direction obliquely intersecting the vertical direction of the vehicle. That is, an upper surface of the inclined portion 34 forms an inclined surface extending in a direction obliquely intersecting the vertical direction. When liquid that enters through the gap G between the reinforcement member 30 (middle reinforcement portion 30M) and the outer panel 10 reaches the upper surface (inclined surface) of the inclined portion 34 by gravity or vibration, the liquid is gently guided downward along the upper surface of the inclined portion 34.

In the present embodiment, the inclined portion 34 has a central inclined portion 341 extending obliquely upward toward the inside of the vehicle, at least one upper inclined portion 342 inclined downward toward the outside in the sensor width direction below the central inclined portion 341 and above the sensor device S, and a side inclined portion 343 extending obliquely upward toward the inside of the vehicle in a region on the side of the central inclined portion 341. Each of the central inclined portion 341, the upper inclined portion 342, and the side inclined portion 343 extends in a direction obliquely intersecting the vertical direction of the vehicle.

Specifically, the vehicle structure 1 is applied as a vehicle front structure, and "obliquely upward toward the inside of the vehicle" of the extending direction of the central inclined portion 341 and the side inclined portion 343 is a direction headed toward the vehicle rear and obliquely upper direction at the vehicle front. Then, the sensor width direction of the inclination direction of the upper inclined portion 342 is the width direction of the sensor front surface Sa of the sensor device S (i.e., vehicle width direction). Accordingly, in the illustrated example, each of the central inclined portion 341 and the side inclined portion 343 has an upper surface inclined downward toward the front (i.e., upward toward the rear) in the longitudinal direction of the vehicle, and the upper inclined portion 342 has an upper surface inclined downward toward the outside (i.e., upward toward the inside) in the vehicle width direction (sensor width direction). In the illustrated example, the side inclined portion 343 is provided to be continuous with the central inclined portion 341 on both right and left sides of the central inclined portion 341.

In the present embodiment, the at least one upper inclined portion 342 is formed of a plurality of upper inclined portions 342 (342a, 342b) separated from each other in the vertical direction and arranged directly above the sensor device S. That is, in the present embodiment, regarding the longitudinal direction of the vehicle and the vehicle width direction, each upper inclined portion 342 (342a, 342b) is arranged above the sensor device S at substantially the same position as the longitudinal position and vehicle width position of the sensor device S, and can also be referred to as being a directly above inclined portion. In the illustrated example, two stages, an upper stage and a lower stage, that is, two upper inclined portions 342 (i.e., directly above inclined portions 342) are provided. Hereinafter, the upper inclined portion 342 on the lower side is referred to as a first upper inclined portion 342a and the upper inclined portion 342 on the upper side is referred to as a second upper inclined portion 342b, as appropriate.

In the illustrated example, the first upper inclined portion 342a has a chevron inclined surface protruding upward, and the second upper inclined portion 342b has a left downward inclined surface. That is, each upper inclined portion (342a, 342b) is inclined downward toward the outside in the sensor width direction. Both the top of the first upper inclined portion 342a and the top of the second upper inclined portion 342b are located on the center line X of the sensor device S and the middle reinforcement portion 30M in the vehicle width direction. Both the inclined surface of the first upper inclined portion 342a and the inclined surface of the second upper inclined portion 342b face upward. Then, the first upper inclined portion 342a projects slightly frontward from the second upper inclined portion 342b in the longitudinal direction of the vehicle. In other words, the second upper inclined portion 342b is retracted from a front portion of the first upper inclined portion 342a in the longitudinal direction of the vehicle. The first upper inclined portion 342a is located above the sensor device S and extends to a predetermined position outside the outer edge of the sensor device S in the sensor width direction (vehicle width direction). The second upper inclined portion 342b is located above the sensor device S and extends to a predetermined position outside one outer edge of the sensor device S in the sensor width direction (vehicle width direction). Then, the width in the longitudinal direction of the vehicle (depth) of the right inclined surface of the first upper inclined portion 342a is longer than the width in the longitudinal direction of the vehicle (depth) of the left inclined surface of the first upper inclined portion 342a.

In the illustrated example, the inclined portion 34 has, in addition to the above elements (341, 342, 343), a first extended inclined portion 344a and a second extended inclined portion 344b. The first extended inclined portion 344a is continuous with the right inclined surface (inclined surface located opposite to second upper inclined portion 342b in sensor width direction) of the first upper inclined portion 342a, and is formed of an inclined surface extended toward the inside of the vehicle (vehicle rear). The second extended inclined portion 344b is continuous with the inclined surface of the second upper inclined portion 342b, and is formed of an inclined surface extended toward the inside of the vehicle (vehicle rear). In the illustrated example, the first extended inclined portion 344a has a stepped shape, and is formed so as to extend upward from the rear end of the right inclined surface of the first upper inclined portion 342a and then extend rearward. Then, in the illustrated example, the first upper inclined portion 342a, the second upper inclined portion 342b, the first extended inclined portion 344a, and the second extended inclined portion 344b are inclined downward toward the front in the inside-outside direction of the vehicle (longitudinal direction of vehicle in this example).

In the illustrated example, a depression 345 that is recessed toward the vehicle rear is formed in a portion between the upper wall of the surrounding wall of the housing hole 30b1 of the attachment portion 30b and the first upper inclined portion 342a. The fixing point F1 of the sensor device S is set below the depression 345. In other words, the depression 345 is provided between the fixing point F1 above the sensor device S and the first upper inclined portion 342a. Then, to increase rigidity at the fixing point F1, a columnar rib 345a extending in the vertical direction is provided so as to divide the depression 345 into two in the vehicle width direction at a position corresponding to the fixing point F1.

With reference to Figures 4 to 6, in the present embodiment, the water conduit portion 33 has a discharge portion 35 that penetrates the upper reinforcement wall 30c vertically and discharges the liquid to the lower side. The discharge portion 35 has a function of receiving a part or all of the liquid having reached the inclined portion 34 and discharging some or all of the received liquid to the lower side. The discharge portion 35 is located between the upper portion 30a and the attachment portion 30b of the middle reinforcement portion 30M in the longitudinal direction of the vehicle. Then, the discharge portion 35 mainly discharges liquid that enters from the upper portion 30a side of the middle reinforcement portion 30M to the back surface side region of the middle reinforcement portion 30M before it reaches the sensor device S. As described above, the discharge portion 35 is configured to discharge liquid to a rear region separated to the rear from the sensor device S.

The discharge portion 35 is provided at a plurality of locations in the upper reinforcement wall 30c. Specifically, in the inclined portion 34, the discharge portion 35 is provided in a region closer to the upper portion 30a side of the middle reinforcement portion 30M and a region closer to the attachment portion 30b side of the middle reinforcement portion 30M. That is, the discharge portion 35 is provided in the vicinity of the gap G that can be the port of entry of a liquid such as rainwater, and in the vicinity of the sensor device S.

The discharge portion 35 is formed so as to be recessed toward the lower side of the vehicle as a whole. The discharge portion 35 has a bottom wall 35a that faces the upper side of the vehicle and receives the liquid. Then, a discharge hole 35b is formed in the bottom wall 35a.

In the illustrated example, the water conduit portion 33 has, as the discharge portion 35, a first discharge portion 351, a second discharge portion 352, a third discharge portion 353, a fourth discharge portion 354, a fifth discharge portion 355, a sixth discharge portion 356, a seventh discharge portion 357, and an eighth discharge portion 358. The first discharge portion 351, the second discharge portion 352, the third discharge portion 353, and the fourth discharge portion 354 are provided in the central inclined portion 341, the fifth discharge portion 355 and the sixth discharge portion 356 are provided in the left (third groove 303 side) side inclined portion 343, and the seventh discharge portion 357 and the eighth discharge portion 358 are provided in the right (fourth groove 304 side) side inclined portion 343. The first discharge portion 351 is located above the second discharge portion 352 and arranged between the first groove 301 and the second discharge portion 352. The third discharge portion 353 is located above the fourth discharge portion 354 and arranged between the second groove 302 and the fourth discharge portion 354. The fifth discharge portion 355 is located above the sixth discharge portion 356 and arranged between the vehicle body coupling portion 31 (panel coupling portion 32) on the third groove 303 side and the sixth discharge portion 356. The seventh discharge portion 357 is located above the eighth discharge portion 358 and arranged between the vehicle body coupling portion 31 (panel coupling portion 32) on the fourth groove 304 side and the eighth discharge portion 358. In the left side inclined portion 343, the opening width in the vehicle width direction of the lower sixth discharge portion 356 is wider (longer) than the opening width in the vehicle width direction of the upper fifth discharge portion 355, and similarly in the right side inclined portion 343, the opening width in the vehicle width direction of the lower eighth discharge portion 358 is wider (longer) than the opening width in the vehicle width direction of the upper seventh discharge portion 357. Then, a lower region of the central inclined portion 341 is divided into three regions in the vehicle width direction by the second discharge portion 352 and the fourth discharge portion 354.

In the illustrated example, in the left and right side inclined portions 343, the water conduit portion 33 has a drainage groove 359 which is a groove for discharging undrained liquid downward via the discharge portion (355, 356, 357, 358). The drainage groove 359 is provided in a part below the sixth discharge portion 356 in the left side inclined portion 343, and in a part below the eighth discharge portion 358 in the right side inclined portion 343. In the illustrated example, the upper reinforcement wall 30c provided with the water conduit portion 33 is bent at the bending portion at the center in the vertical direction as described above. A lower part of the bending portion is slightly recessed rearward. Then, the drainage groove 359 extends in the vertical direction with an arcuate groove bottom protruding toward the rear when viewed from above, the groove bottom being formed in an eyebrow-shape (arcuate) protruding upward in front view.

With reference to Figures 5 and 7, in each discharge portion (351 to 358), the discharge hole 35b is formed on the vehicle rear side (i.e., closer to gap G which is port of entry of liquid) of the bottom wall 35a. The discharge hole 35b is opened at a position separated to the rear from the sensor device S in the longitudinal direction of the vehicle in plan view as viewed from one side of the vehicle in the vertical direction. Moreover, with reference to Figure 6, the discharge hole 35b is also opened so as to penetrate the vehicle in the longitudinal direction of the vehicle. The bottom wall 35a of the second discharge portion 352 is formed of the second extended inclined portion 344b extended to the rear from the second upper inclined portion 342b, and the bottom wall 35a of the fourth discharge portion 354 is formed of the first extended inclined portion 344a extended to the rear from the first upper inclined portion 342a.

In addition, in the present embodiment, in relation to the panel coupling portion 32 and the attachment portion 30b, the discharge portion 35 is provided in each of a region adjacent in the sensor width direction to a part of the upper reinforcement wall 30c extending from the panel coupling portion 32 (which here includes vehicle body coupling portion 31), and a region of the upper reinforcement wall 30c on the attachment portion 30b side. That is, the first discharge portion 351 and the third discharge portion 353 are provided in a region adjacent in the sensor width direction (vehicle width direction) to a part of the upper reinforcement wall 30c extending continuously downward from the central panel coupling portion 32, and the second discharge portion 352 and the fourth discharge portion 354 are provided in the region of the upper reinforcement wall 30c on the attachment portion 30b side. The fifth discharge portion 355 is provided in a region adjacent in the sensor width direction to a part of the upper reinforcement wall 30c extending continuously downward from the panel coupling portion 32 (vehicle body coupling portion 31) on the third groove 303 side, and the sixth discharge portion 356 is provided in a region of the upper reinforcement wall 30c on the attachment portion 30b side below the fifth discharge portion 355. The seventh discharge portion 357 is provided in a region adjacent in the sensor width direction to a part of the upper reinforcement wall 30c extending continuously downward from the panel coupling portion 32 (vehicle body coupling portion 31) on the fourth groove 304 side, and the eighth discharge portion 358 is provided in a region of the upper reinforcement wall 30c on the attachment portion 30b side below the seventh discharge portion 357.

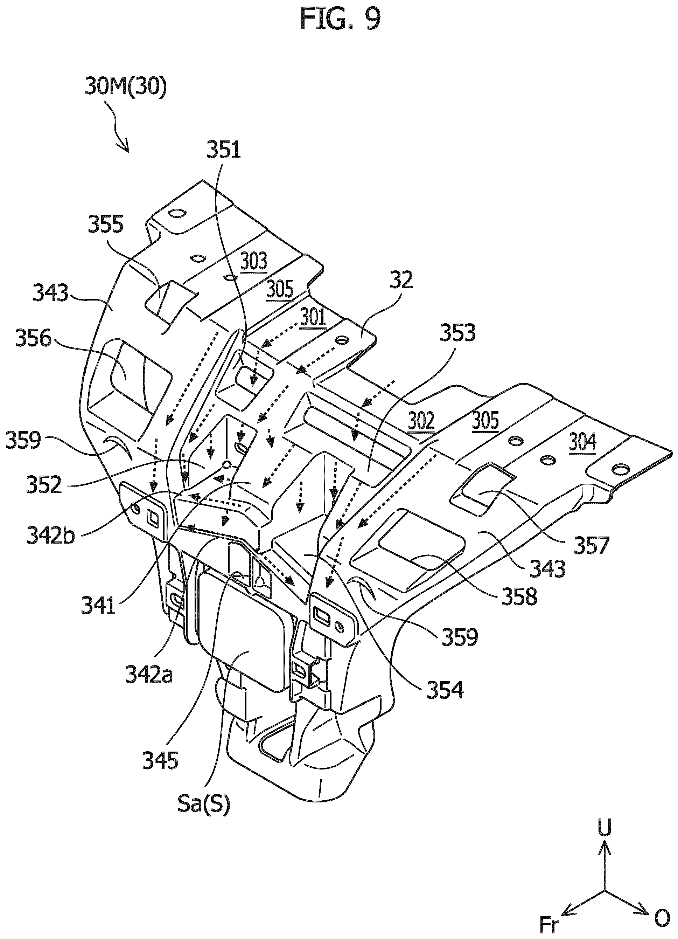

Next, an example of the flow of liquid along the middle reinforcement portion 30M will be described with reference to Figures 8 and 9. Note that as described above, the gap G between the upper portion 30a of the middle reinforcement portion 30M and the outer panel 10 is mainly formed in parts corresponding to the first groove 301 and the second groove 302. The first groove 301 and the second groove 302 can be the main port of entry of liquid such as rainwater. Hereinafter, the description will be given by using as an example a case in which liquid enters from the first groove 301 and the second groove 302. In Figure 9, an example of the route (drainage route) of liquid flowing along the middle reinforcement portion 30M is indicated by dashed arrows.

Liquid that enters the first groove 301 and the second groove 302 reaches the central inclined portion 341 of the water conduit portion 33. Note, however, that a small amount of the liquid that enters the first groove 301 and the second groove 302 can enter the interface between the central panel coupling portion 32 and the outer panel 10 or the interface between the raised portion 305 and the outer panel 10 and reach the central inclined portion 341 or the side inclined portion 343 through the interface.

With reference to Figure 8, the discharge hole 35b of each discharge portion (351, 352, 353, 354) is located behind the sensor device S in the longitudinal direction of the vehicle, and the discharge holes 35b of the discharge portions (351, 352, 354) other than the discharge hole 35b of the upper third discharge portion 35 are located on the outside in the vehicle width direction of the sensor device S. Accordingly, the liquid guided by the discharge hole 35b is less likely to drop to a position directly above the sensor device S even when it is discharged. Specifically, with reference to Figure 9, the liquid that reaches the central inclined portion 341 is gently guided downward along the upper surface (inclined surface) of the central inclined portion 341. Most of the liquid that reaches the central inclined portion 341 drops to the upper discharge portion 35 (first discharge portion 351 and third discharge portion 353) and the lower discharge portion 35 (second discharge portion 352 and fourth discharge portion 354) to be received. Most of the liquid received by the discharge portions 35 of each stage is discharged downward through the discharge hole 35b to be guided to a position away from the sensor device S. A part of the liquid received by the upper discharge portion 35 is not discharged from the discharge hole 35b of the upper discharge portion 35, and is received by the lower discharge portion 35 or is guided downward along the inclined surface of the central inclined portion 341. A part of the liquid received by the lower discharge portion 35 is not discharged from the discharge hole 35b of the lower discharge portion 35, and is guided further downward along the inclined surface of the central inclined portion 341. Then, all or most of the liquid not discharged through the discharge portion 35 of each stage in the central inclined portion 341 is guided to the outside in the sensor width direction along the second upper inclined portion 342b and the first upper inclined portion 342a in the region directly above the sensor device S. Thereafter, the liquid is discharged downward through a region separated to the right of the sensor device S or a region separated to the left of the sensor device S to be guided to a position away from the sensor device S.

The liquid that reaches the side inclined portion 343 is gently guided downward along the upper surface (inclined surface) of the side inclined portion 343. In the illustrated example, the liquid that reaches the side inclined portion 343 is guided directly downward along a part of the inclined surface of the side inclined portion 343 near the central inclined portion 341 and is discharged downward from the lower edge of the side inclined portion 343, to be guided to a position separated far away to the left and right from the sensor device S.

As described above, the gap G that can be a port of entry of liquid is formed slightly in parts corresponding to the third groove 303 and the fourth groove 304 as well. Accordingly, liquid may enter the third groove 303 and the fourth groove 304 in some cases. In this case, the liquid that enters the third groove 303 is guided (discharged) to a position separated far away to the left and right from the sensor device S via the inclined surface of the side inclined portion 343, the fifth discharge portion 355, and the sixth discharge portion 356.

The vehicle structure 1 according to the present embodiment configured as described above has the water conduit portion 33 that is located above the sensor device S on the back surface 10e side of the outer panel 10 to guide liquid to a position away from the sensor device S. Accordingly, even if liquid such as rainwater enters the gap G between the upper portion 30a of the reinforcement member 30 and the upper portion of the outer panel 10, the entering (penetrating) liquid is efficiently guided to a position away from the sensor device S by the water conduit portion 33, and the liquid is effectively kept from reaching the sensor device S.

As described above, the vehicle structure 1 according to the present embodiment is a vehicle structure having a structure that can keep liquid such as rainwater from reaching the sensor device S.

In the present embodiment, the water conduit portion 33 has the inclined portion 34 extending in a direction obliquely intersecting the vertical direction of the vehicle. Hence, the entering (penetrating) liquid is easily guided to a position (region) away from the sensor device S. Furthermore, the flow speed of the entering (penetrating) liquid is reduced by the inclined portion 34, the entering (penetrating) liquid is gently guided by the inclined portion 34, and the time it takes to reach the sensor device S which is a protection target (submergence control target) from the gap G that can be a port of entry is extended. Accordingly, a minute amount of entering (penetrating) liquid is evaporated during the flow process, and arrival at the sensor device S is effectively avoided.

In the present embodiment, the inclined portion 34 has at least one upper inclined portion 342 inclined downward toward the outside in the sensor width direction above the sensor device S. Hence, liquid is more reliably kept from reaching the upper portion of the sensor device S.

In the present embodiment, at least one upper inclined portion 342 is formed of a plurality of upper inclined portions (342a, 342b) separated from each other in the vertical direction and arranged directly above the sensor device S. Accordingly, even if a part of the liquid reaches a region directly above the sensor device S, the upper inclined portions (342a, 342b) provided in a plurality of stages vertically more reliably keep the liquid from reaching the sensor device S. That is, in the illustrated example, even if liquid that reaches the upper inclined portion (second upper inclined portion 342b) on the upper side is not guided to a position away from the sensor device S and flows directly downward from the upper inclined portion (second upper inclined portion 342b) on the upper side, this liquid can be guided more reliably to a position away from the sensor device S by the upper inclined portion (first upper inclined portion 342a) on the lower side.

In the present embodiment, the vehicle structure 1 includes the reinforcement member 30 that is coupled to the vehicle body structural member 40 of the vehicle and reinforces the outer panel 10 from its back surface 10e side. The reinforcement member 30 has the attachment portion 30b of the sensor device S, and the upper reinforcement wall 30c that is located above the attachment portion 30b and has a portion extending obliquely upward toward the inside of the vehicle. The water conduit portion 33 is formed on a surface of the upper reinforcement wall 30c facing the back surface 10e of the outer panel 10. As a result, the upper surface of the upper reinforcement wall 30c forms the central inclined portion 341 and the side inclined portion 343 which are a part of the inclined portion 34 of the water conduit portion 33, and the inclined surfaces of the central inclined portion 341 and the side inclined portion 343 reduce the flow speed of liquid guided downward. As a result, the liquid guided downward along the inclined surface can be kept from reaching the sensor device S.

In the present embodiment, the upper portion 30a of the reinforcement member 30 extends toward the inside of the vehicle from the upper end of the upper reinforcement wall 30c and overlaps on the back surface 10e of the upper portion of the outer panel 10, and the water conduit portion 33 is arranged between the upper portion 30a of the reinforcement member 30 and the attachment portion 30b. As a result, even if liquid enters from the gap G between the upper portion 30a of the reinforcement member 30 and the back surface 10e of the upper portion of the outer panel 10, the entering (penetrating) liquid is reliably guided to a position away from the sensor device S by the water conduit portion 33 arranged between the upper portion 30a and the attachment portion 30b of the reinforcement member 30.

In the present embodiment, the water conduit portion 33 has the discharge portion 35 that penetrates the upper reinforcement wall 30c in the vertical direction and discharges liquid to the lower side. As a result, the discharge portion 35 is formed in the central inclined portion 341 and the side inclined portion 343 of the upper reinforcement wall 30c, so that liquid flowing down along the upper reinforcement wall 30c (central inclined portion 341 and side inclined portion 343) is reliably and efficiently discharged to a position away from the sensor device S by the discharge portion 35.

In the present embodiment, the upper portion 30a of the reinforcement member 30 is provided with the panel coupling portion 32 (vehicle body coupling portion 31 also serves as panel coupling portion 32 in illustrated example) coupled to the outer panel 10. The discharge portion 35 of the water conduit portion 33 is provided in a region adjacent in the sensor width direction to a part of the upper reinforcement wall 30c extending from the panel coupling portion 32, and a region of the upper reinforcement wall 30c on the attachment portion 30b side. Accordingly, the part of the upper reinforcement wall 30c extending from the panel coupling portion 32 extends to the upper portion of the attachment portion 30b, so that the panel coupling portion 32 and the attachment portion 30b are easily connected. As a result, the sensor device S is supported stably. Then, since the discharge portion 35 is provided in the region on the attachment portion 30b side as well, liquid is more reliably kept from reaching the sensor device S. Moreover, in the illustrated example, in the central inclined portion 341, the discharge portion 35 (first discharge portion 351 and third discharge portion 353) is provided in a position shifted from the panel coupling portion 32 in the sensor width direction, and the discharge portion 35 is arranged directly below the first groove 301 and the second groove 302 that can be the main port of entry. As a result, arrival of liquid at the sensor device S (submergence) is extremely reliably avoided.

In the present embodiment, the inclined portion 34 of the water conduit portion 33 has the central inclined portion 341 extending obliquely upward toward the inside of the vehicle, and at least one upper inclined portion 342 inclined downward toward the outside in the sensor width direction below the central inclined portion 341 and above the sensor device S. As a result, the water conduit portion 33 can reduce the flow speed of liquid along the water conduit portion 33 by the central inclined portion 341 and discharge the liquid to a position away from the sensor device S in the sensor width direction by the upper inclined portion 342. Thus, arrival of liquid at the sensor device S (submergence) is effectively avoided.

In the illustrated example, the width in the longitudinal direction of the vehicle (depth) of the right inclined surface of the first upper inclined portion 342a is longer (wider) than the width in the longitudinal direction of the vehicle (depth) of the left inclined surface of the first upper inclined portion 342a. Accordingly, even if the liquid received by the inclined surface of the first extended inclined portion 344a is not guided to the outside in the vehicle width direction and flows to the right inclined surface of the front first upper inclined portion 342a, all or most of the liquid flowing onto the right inclined surface can be guided in a direction away from the sensor device S to the outside in the vehicle width direction. Then, since the depression 345 is provided between the fixing point F1 above the sensor device S and the first upper inclined portion 342a, the liquid is less likely to reach the fixing point F1. As a result, the liquid is kept from reaching the sensor device S along the fixing point F1.

In the illustrated example, in the left and right side inclined portions 343, the opening width in the vehicle width direction of the lower discharge portion (356, 358) is wider than the opening width in the vehicle width direction of the upper discharge portion (355, 357). Hence, the liquid that is not discharged at the upper discharge portion and is guided downward is easily discharged at the lower discharge portion.

Here, the upper inclined portion 342 is provided on the front surface of the middle reinforcement portion 30M. Accordingly, for example, at the time of a frontal collision or the like, when external force is transmitted on the middle reinforcement portion 30M from the front, the transmitted external force is easily transmitted to the outside in the vehicle width direction by the upper inclined portion 342. As a result, local deformation of the middle reinforcement portion 30M is avoided, and damage of the sensor device S by the local deformation is also avoided.

Furthermore, since the first upper inclined portion 342a and the second upper inclined portion 342b are arranged to be shifted to the front and rear in the longitudinal direction of the vehicle, at the time of a frontal collision or the like, stepwise compressive deformation of the first upper inclined portion 342a and the second upper inclined portion 342b is promoted, and impact energy from the external force is efficiently absorbed as deformation energy of the upper inclined portion 342.

In the illustrated example, the top of the upper inclined portion 342 is located on the center line X of the sensor device S in front view as viewed from the front. Then, most of the central inclined portion 341 is located above and behind the top of the upper inclined portion 342. Accordingly, at the time of a frontal collision or the like, external force transmitted to the upper inclined portion 342 from the front is received via the central inclined portion 341, and then the impact energy can be absorbed as deformation energy of the central inclined portion 341. Note, however, that a depression (i.e., second discharge portion 352 and fourth discharge portion 354) is formed on both sides in the vehicle width direction below the central inclined portion 341. Accordingly, side walls (i.e., right wall forming second discharge portion 352 and left wall forming fourth discharge portion 354) extending longitudinally and vertically are arranged in the vicinity of the center line X of the central inclined portion 341. As a result, at the time of a frontal collision or the like, excessive deformation of the central inclined portion 341 is avoided and external force is less likely to be transmitted to the sensor device S.

Furthermore, in a rear portion (i.e., upper portion) of the central inclined portion 341, the first discharge portion 351 and the third discharge portion 353 are provided side by side on the left and right, and the opening width of the discharge hole 35b of the third discharge portion 353 is greater than the opening width of the discharge hole 35b of the first discharge portion 351. As a result, at the time of a frontal collision or the like, torsional deformation of the central inclined portion 341 is promoted. Additionally, in the central inclined portion 341, a part between the first discharge portion 351 and the third discharge portion 353 is provided at a position to be offset to one side (left in illustrated example) in the vehicle width direction from the center line X. As a result, torsional deformation of the central inclined portion 341 can be promoted effectively.

Moreover, a part of the rear end of the central inclined portion 341 (rear end of part between first discharge portion 351 and third discharge portion 353 in illustrated example) is connected to the panel coupling portion 32 that has high rigidity by being coupled to the outer panel 10. As a result, at the time of a frontal collision or the like, a part of the external force is also received by the panel coupling portion 32. Moreover, since the right wall forming the first discharge portion 351 and the left wall forming the third discharge portion 353 are located in front of the panel coupling portion 32, rigidity around the panel coupling portion 32 is improved.

In addition, the fixing point F1 of the sensor device S is provided below the upper inclined portion 342 and above the sensor device S. Then, in the middle reinforcement portion 30M, a part between the fixing point F1 and the panel coupling portion 32 is formed to be continuous through a part between the first discharge portion 351 and the third discharge portion 353 in the central inclined portion 341, a part between the second discharge portion 352 and the fourth discharge portion 354 in the central inclined portion 341, and the top of the upper inclined portion 342. As a result, during normal use or the like, stable support of the sensor device S is achieved.

Moreover, in the middle reinforcement portion 30M, a part between the left fixing point F2 of the sensor device S and the left first vehicle body coupling portion 31a is formed to be continuous through the inside part in the vehicle width direction of the left side inclined portion 343 and the left side part of the attachment portion 30b. Similarly, in the middle reinforcement portion 30M, a part between the right fixing point F3 of the sensor device S and the right first vehicle body coupling portion 31a is formed to be continuous through the inside part in the vehicle width direction of the right side inclined portion 343 and the right side part of the attachment portion 30b. As a result, during normal use or the like, stable support of the sensor device S is achieved more effectively.

The front surface facing the front below the inclined surface of the first upper inclined portion 342a is provided on the same plane as or is continuous with the front surface facing the front below the side inclined portion 343. As a result, at the time of a frontal collision or the like, external force transmitted to the middle reinforcement portion 30M is easily received by the first vehicle body coupling portion 31a and the first cross member 43 having high rigidity.

Although the embodiment of the present invention has been described above, the present invention is not limited to the above embodiment, and further modifications and changes can be made on the basis of the technical concept of the present invention.

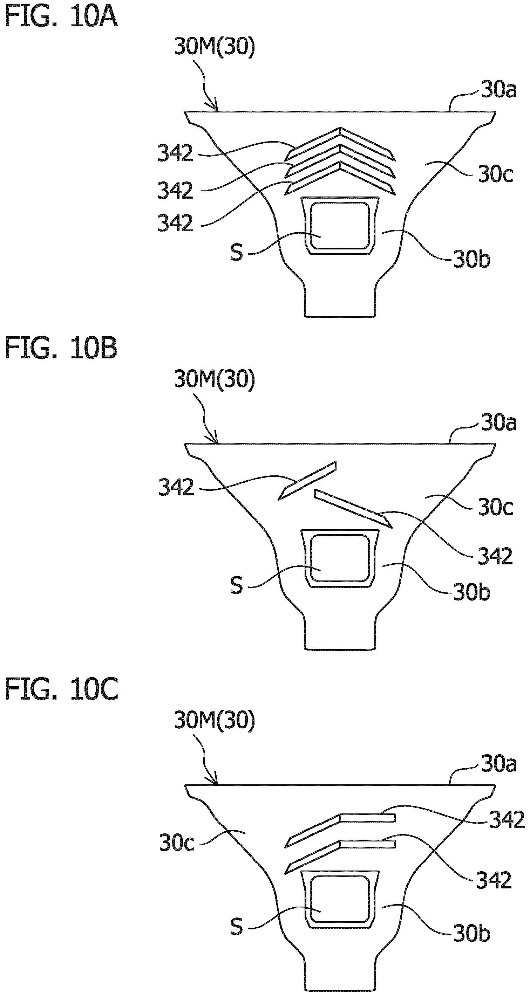

For example, as illustrated in Figure 10A (first modification), Figure 10B (second modification), and Figure 10C (third modification), various modifications are applicable as the upper inclined portion 342. Figures 10A to 10C are schematic front views of a middle reinforcement portion 30M according to modifications. The number of stages of the upper inclined portions 342 is not limited to two stages vertically, and it may be three stages (see Figure 10A), may be four or more stages, or may be one stage.

In a case in which the upper inclined portions 342 are provided in a plurality of stages separated from each other vertically, (1) each upper inclined portion 342 may be formed in a shape having a chevron inclined surface protruding upward as in the first upper inclined portion 342a (see Figure 10A). (2) Alternatively, each upper inclined portion 342 may be formed in a shape having an inclined surface inclined downward toward the outside on one side in the sensor width direction as in the second upper inclined portion 342b (see Figure 10B). In this case, the left-right direction of the inclined surface of each stage may be flipped as illustrated in Figure 10B. (3) Furthermore, each upper inclined portion 342 may be formed in a shape in which one end side in the sensor width direction is inclined downward toward the outside in the sensor width direction and the other end side in the sensor width direction extends horizontally (see Figure 10C). In this case, the inclined surfaces of each stage may be arranged on the same side in the sensor width direction as illustrated in Figure 10C, or they may be arranged on opposite sides of each other (not illustrated). Alternatively, the inclined surface of the upper inclined portion 342 may be formed in an arc protruding upward (not illustrated).

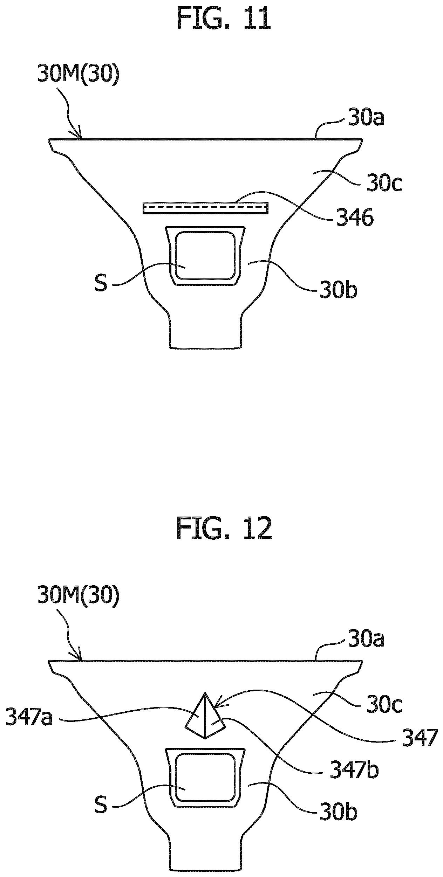

Alternatively, the middle reinforcement portion 30M may have, instead of the upper inclined portion 342, an upper straight eave portion 346 extending linearly in the sensor width direction above a sensor device S (directly above in illustrated example), as illustrated in Figure 11 (fourth modification). The front edge of the upper straight eave portion 346 protrudes upward, for example, and liquid is guided in the sensor width direction. In this case, the upper straight eave portion 346 may be provided in one stage as illustrated in Figure 11, or may be provided in a plurality of stages vertically (not illustrated). Note that, although not illustrated, a sponge-like water-absorbing member made of urethane or the like may be provided below the upper straight eave portion 346. Alternatively, the middle reinforcement portion 30M may have the upper straight eave portion 346 in addition to the upper inclined portion 342. In this case, the upper straight eave portion 346 is arranged below the upper inclined portion 342 and above the sensor device S, for example.

Alternatively, the middle reinforcement portion 30M may have, instead of the upper inclined portion 342, an upper beak-shaped portion 347 having a substantially triangular left side surface 347a (i.e., left pyramidal surface 347a) facing left obliquely forward and upward, and a substantially triangular right side surface 347b (i.e., right pyramidal surface 347b) facing right obliquely forward and upward, above (directly above in illustrated example) a sensor device S, as illustrated in Figure 12 (fifth modification). The right edge of the left side surface 347a is connected to the left edge of the right side surface 347b on a center line X of a middle reinforcement portion 30M in front view, for example. The upper beak-shaped portion 347 is located below a central inclined portion 341 and in front of the central inclined portion 341 in the longitudinal direction. In this case, liquid guided into upper beak-shaped portion 347 is guided outward in the vehicle width direction and to the front at each of the left side surface 347a and the right side surface 347b. Note that the upper beak-shaped portion 347 is preferably located in front of the sensor device S in the longitudinal direction of the vehicle.

The upper inclined portion 342, the upper straight eave portion 346, and the upper beak-shaped portion 347 are not limited to being placed in the region directly above the sensor device S (i.e., region that is the same as both longitudinal position and vehicle width position of sensor device S in the longitudinal direction of the vehicle and vehicle width direction and is above sensor device S), but may be placed in a position that is shifted (e.g., rearward) from the region directly above the sensor device S in the longitudinal direction of the vehicle.

In the illustrated example, the discharge hole 35b is provided so as to avoid the region directly above the sensor device S (i.e., region in both the same longitudinal position and vehicle width position as sensor device S in the longitudinal direction of the vehicle and vehicle width direction). In the illustrated example, most of the discharge holes 35b are arranged behind and on the outside in the vehicle width direction of the sensor device S so as to avoid the region directly above the sensor device S, but the invention is not limited thereto. The discharge hole 35b may be arranged in the same longitudinal position as the sensor device S in the longitudinal direction if it is located on the outside in the vehicle width direction of the sensor device S. Alternatively, the discharge hole 35b may be arranged in the same vehicle width position as the sensor device S in the vehicle width direction if it is located in front of or behind the sensor device S.

Moreover, if the inclined portion 34 (central inclined portion 341, upper inclined portion 342) can completely prevent the liquid from reaching the sensor front surface Sa of the sensor device S, for example, some of the plurality of discharge holes 35b may be located in the region directly above the sensor device S, some of the plurality of discharge holes 35b may be absent, or the discharge holes 35b may not be provided in all discharge portions 35 (351 to 358).

In addition, the discharge hole 35b is preferably provided at a position avoiding the region directly above sensor wiring (not illustrated) which is connected to the sensor device S. This can prevent liquid from adhering to the sensor wiring and liquid from traveling along the sensor wiring to reach the connection with the sensor device S.

In addition, although not illustrated in the figure, a groove bottom of the drainage groove 359 may be formed in a V-shape protruding rearward when viewed from above and in a chevron (triangular) shape protruding upward when viewed from the front.

In addition, the outer panel 10 is assumed to be a front bumper with the front grille 10d, but this is not so limited. The outer panel 10 may be, for example, a front bumper without the front grille 10d, a single front grille 10d, or a decorative member (e.g., member with metallic appearance).

Each bracket (first upper bracket 45a, second upper bracket 45b, and lower bracket 46) is formed separately from the vehicle body structural member 40, but is not limited to this, and may be formed together with the vehicle body structural member 40 by welding or the like to form a part of the vehicle body structural member 40.

In the present embodiment, the reinforcement member 30 is formed of the middle reinforcement portion 30M, the left side reinforcement portion 30S, and the right side reinforcement portion 30S, which are members physically separated from each other. However, the invention is not limited to this, and in the reinforcement member 30, the middle reinforcement portion 30M and each side reinforcement portion 30S may be formed integrally with each other by injection molding or the like.

In the present embodiment, the vehicle structure 1 is applied as a vehicle front structure, but the invention is not limited thereto. The sensor device S is not limited to being attached to the front of the vehicle, and it may also be attached to the rear or the side of the vehicle. The vehicle structure 1 may be applied as a vehicle rear structure or as a vehicle side structure. In the case of a rear structure, the outer panel 10 is, for example, a rear bumper, a rear grille, a back panel, or a rear door panel, and in the case of a side structure, the outer panel 10 is, for example, a side panel or a side door panel.

In the present embodiment, the water conduit portion 33 is formed integrally with the reinforcement member 30, but the invention is not limited thereto, and the water conduit portion 33 may be formed of a member that is physically separated from the reinforcement member 30 and attached to the reinforcement member 30. In this case, the water conduit portion 33 may be formed of a part of a sensor support plate that supports the sensor device S, for example.

### [Reference Signs List]

- 1: Vehicle structure
- 10: Outer panel
- 10e: Back surface
- 30: Reinforcement member
- 30a: Upper portion
- 30b: Attachment portion
- 30c: Upper reinforcement wall
- 32: Panel coupling portion
- 33: Water conduit portion
- 34: Inclined portion
- 341: Central inclined portion
- 342: Upper inclined portion
- 342a: First upper inclined portion (upper inclined portion)
- 342b: Second upper inclined portion (upper inclined portion)
- 343: Side inclined portion
- 35: Discharge portion
- 351: First discharge portion (discharge portion)
- 352: Second discharge portion (discharge portion)
- 353: Third discharge portion (discharge portion)
- 354: Fourth discharge portion (discharge portion)
- 355: Fifth discharge portion (discharge portion)
- 356: Sixth discharge portion (discharge portion)
- 357: Seventh discharge portion (discharge portion)
- 358: Eighth discharge portion (discharge portion)
- 40: Vehicle body structural member
- G: Gap
- S: Sensor device

## Claims

1. A vehicle structure (1) including a sensor device (S) on a back surface side of an outer panel (10) forming a design surface on an outside of a vehicle,
the vehicle structure (1) comprises:
a reinforcement member (30) that is coupled to a vehicle body structural member (40) of the vehicle and reinforces the outer panel (10) from the back surface side of the outer panel (10), the reinforcement member (30) having an attachment portion (30b) to which the sensor device (S) is attached and an upper reinforcement wall (30c) that is located above the attachment portion (30b) **characterised in that** the upper reinforcement wall (30c) has a portion extending obliquely upward toward the inside of the vehicle; and
a water conduit portion (33) is provided on a surface of the upper reinforcement wall (30c) facing a back surface (10e) of the outer panel (10) and guides liquid to a position away from the sensor device (S), and
the water conduit portion (33) has an inclined portion (34) extending in a direction obliquely intersecting a vertical direction of the vehicle.

2. The vehicle structure (1) according to claim 1, wherein
the sensor device (S) is arranged at the center in a vehicle width direction on the back surface side of the outer panel (10), and
the inclined portion (34) has at least one upper inclined portion (342) that is arranged above the sensor device (S), at least one end side in the vehicle width direction of the upper inclined portion (342) inclined downward toward the outside in a sensor width direction above the sensor device.

3. The vehicle structure (1) according to claim 2, wherein
the at least one upper inclined portion (342) includes a plurality of upper inclined portions (342a, 342b) separated from each other in the vertical direction and arranged directly above the sensor device (S).

4. The vehicle structure (1) according to claim 1, wherein
an upper portion (30a) of the reinforcement member (30) extends toward the inside of the vehicle from an upper end of the upper reinforcement wall (30c) and is overlapped on an upper back surface of the outer panel (10), and
the water conduit portion (33) is arranged between the upper portion (30a) of the reinforcement member (30) and the attachment portion (30b).

5. The vehicle structure (1) according to claim 4, wherein
the water conduit portion (33) has a discharge portion (35) that penetrates the upper reinforcement wall (33c) vertically and discharges the liquid to the lower side.

6. The vehicle structure (1) according to claim 5, wherein
a panel coupling portion (32) coupled to the outer panel (10) is provided in the upper portion (30a) of the reinforcement member (30), and
the discharge portion (35) is provided in each of a region of the upper reinforcement wall (30c) adjacent in the sensor width direction to a portion extending from the panel coupling portion (32), and a region of the upper reinforcement wall (30c) on the attachment portion (30b) side.

7. The vehicle structure (1) according to claim 1, wherein
the inclined portion (34) of the water conduit portion (33) has a central inclined portion (341) extending obliquely upward toward the inside of the vehicle, and at least one upper inclined portion (342) inclined downward toward the outside in the sensor width direction below the central inclined portion (341) and above the sensor device (S).

## Patentansprüche

1. Fahrzeugaufbau (1) mit einer Sensorvorrichtung (S) an einer Rückflächenseite einer Außenplatte (10), die eine Designoberfläche an einer Außenseite eines Fahrzeugs bildet, wobei der Fahrzeugaufbau (1) Folgendes umfasst:
• ein Verstärkungselement (30), das mit einem Fahrzeugkarosseriestrukturteil (40) des Fahrzeugs gekoppelt ist und die Außenplatte (10) von der Rückflächenseite der Außenplatte (10) her verstärkt, wobei das Verstärkungselement (30) einen Befestigungsabschnitt (30b), an dem die Sensorvorrichtung (S) befestigt ist, und eine obere Verstärkungswand (30c), die über dem Befestigungsabschnitt (30b) angeordnet ist, aufweist, **dadurch gekennzeichnet, dass** die obere Verstärkungswand (30c) einen Abschnitt aufweist, der sich schräg nach oben zum Fahrzeuginneren hin erstreckt; und
• einen Wasserleitungsabschnitt (33), der an einer Oberfläche der oberen Verstärkungswand (30c), die einer Rückfläche (10e) der Außenplatte (10) zugewandt ist, vorgesehen ist und Flüssigkeit zu einer von der Sensorvorrichtung (S) entfernten Position leitet, und
wobei der Wasserleitungsabschnitt (33) einen geneigten Abschnitt (34) aufweist, der sich in einer eine vertikale Richtung des Fahrzeugs schräg schneidenden Richtung erstreckt.

2. Fahrzeugaufbau (1) nach Anspruch 1, wobei
• die Sensorvorrichtung (S) in der Mitte in einer Fahrzeugbreitenrichtung an der Rückflächenseite der Außenplatte (10) angeordnet ist, und
• der geneigte Abschnitt (34) mindestens einen oberen geneigten Abschnitt (342) aufweist, der über der Sensorvorrichtung (S) angeordnet ist, wobei mindestens eine Endseite des oberen geneigten Abschnitts (342) in der Fahrzeugbreitenrichtung über der Sensorvorrichtung nach unten zum Äußeren in einer Sensorbreitenrichtung geneigt ist.

3. Fahrzeugaufbau (1) nach Anspruch 2, wobei der mindestens eine obere geneigte Abschnitt (342) eine Mehrzahl von oberen geneigten Abschnitten (342a, 342b) umfasst, die in der vertikalen Richtung voneinander getrennt und direkt über der Sensorvorrichtung (S) angeordnet sind.

4. Fahrzeugaufbau (1) nach Anspruch 1, wobei
• ein oberer Abschnitt (30a) des Verstärkungselements (30) sich von einem oberen Ende der oberen Verstärkungswand (30c) zum Fahrzeuginneren hin erstreckt und eine obere Rückfläche der Außenplatte (10) überlappt, und
• der Wasserleitungsabschnitt (33) zwischen dem oberen Abschnitt (30a) des Verstärkungselements (30) und dem Befestigungsabschnitt (30b) angeordnet ist.

5. Fahrzeugaufbau (1) nach Anspruch 4, wobei der Wasserleitungsabschnitt (33) einen Ablaufabschnitt (35) aufweist, der die obere Verstärkungswand (33c) vertikal durchdringt und die Flüssigkeit zur Unterseite abführt.

6. Fahrzeugaufbau (1) nach Anspruch 5, wobei
• ein Plattenkopplungsabschnitt (32), der mit der Außenplatte (10) gekoppelt ist, in dem oben Abschnitt (30a) des Verstärkungselements (30) vorgesehen ist, und
• der Ablaufabschnitt (35) in jedem von einem Bereich der oberen Verstärkungswand (30c), der in der Sensorbreitenrichtung an einen sich von dem Plattenkopplungsabschnitt (32) erstreckenden Abschnitt angrenzt, und einem Bereich der oberen Verstärkungswand (30c) auf der Seite des Befestigungsabschnitts (30b) vorgesehen ist.

7. Fahrzeugaufbau (1) nach Anspruch 1, wobei der geneigte Abschnitt (34) des Wasserleitungsabschnitts (33) einen mittleren geneigten Abschnitt (341) aufweist, der sich schräg nach oben zum Fahrzeuginneren hin erstreckt, und mindestens einen oberen geneigten Abschnitt (342), der unter dem mittleren geneigten Abschnitt (341) und über der Sensorvorrichtung (S) nach unten zum Äußeren in der Sensorbreitenrichtung geneigt ist.

## Revendications

1. Structure de véhicule (1) comprenant un dispositif capteur (S) sur un côté de surface arrière d'un panneau extérieur (10) formant une surface de style sur un extérieur d'un véhicule, la structure de véhicule (1) comprenant :
• un élément de renforcement (30) qui est couplé à un élément de structure de carrosserie de véhicule (40) du véhicule et renforce le panneau extérieur (10) depuis le côté de surface arrière du panneau extérieur (10), l'élément de renforcement (30) comportant une portion de fixation (30b) à laquelle le dispositif capteur (S) est fixé et une paroi de renforcement supérieure (30c) qui est située au-dessus de la portion de fixation (30b), **caractérisée en ce que** la paroi de renforcement supérieure (30c) comporte une portion s'étendant obliquement vers le haut vers l'intérieur du véhicule ; et
• une portion de conduit d'eau (33) qui est prévue sur une surface de la paroi de renforcement supérieure (30c) faisant face à une surface arrière (10e) du panneau extérieur (10) et guide du liquide vers une position éloignée du dispositif capteur (S), et
la portion de conduit d'eau (33) comportant une portion inclinée (34) s'étendant dans une direction coupant obliquement une direction verticale du véhicule.

2. Structure de véhicule (1) selon la revendication 1, dans laquelle
• le dispositif capteur (S) est disposé au centre dans une direction de la largeur du véhicule sur le côté de surface arrière du panneau extérieur (10), et
• la portion inclinée (34) comporte au moins une portion inclinée supérieure (342) qui est disposée au-dessus du dispositif capteur (S), au moins un côté d'extrémité dans la direction de la largeur du véhicule de la portion inclinée supérieure (342) étant incliné vers le bas vers l'extérieur dans une direction de la largeur de capteur au-dessus du dispositif capteur.

3. Structure de véhicule (1) selon la revendication 2, dans laquelle la au moins une portion inclinée supérieure (342) comprend une pluralité de portions inclinées supérieures (342a, 342b) séparées les unes des autres dans la direction verticale et disposées directement au-dessus du dispositif capteur (S).

4. Structure de véhicule (1) selon la revendication 1, dans laquelle
• une portion supérieure (30a) de l'élément de renforcement (30) s'étend vers l'intérieur du véhicule depuis une extrémité supérieure de la paroi de renforcement supérieure (30c) et est superposée sur une surface arrière supérieure du panneau extérieur (10), et
• la portion de conduit d'eau (33) est disposée entre la portion supérieure (30a) de l'élément de renforcement (30) et la portion de fixation (30b).

5. Structure de véhicule (1) selon la revendication 4, dans laquelle la portion de conduit d'eau (33) comporte une portion de décharge (35) qui traverse la paroi de renforcement supérieure (33c) verticalement et décharge le liquide vers le côté inférieur.

6. Structure de véhicule (1) selon la revendication 5, dans laquelle
• une portion de couplage de panneau (32) couplée au panneau extérieur (10) est prévue dans la portion supérieure (30a) de l'élément de renforcement (30), et
• la portion de décharge (35) est prévue dans chacune d'une région de la paroi de renforcement supérieure (30c) adjacente dans la direction de la largeur de capteur à une portion s'étendant depuis la portion de couplage de panneau (32), et d'une région de la paroi de renforcement supérieure (30c) du côté de la portion de fixation (30b).

7. Structure de véhicule (1) selon la revendication 1, dans laquelle la portion inclinée (34) de la portion de conduit d'eau (33) comporte une portion inclinée centrale (341) s'étendant obliquement vers le haut vers l'intérieur du véhicule, et au moins une portion inclinée supérieure (342) inclinée vers le bas vers l'extérieur dans la direction de la largeur de capteur en dessous de la portion inclinée centrale (341) et au-dessus du dispositif capteur (S).
